# DEMANDE DE BREVET EUROPEEN

(11) **EP 1 445 127 A1**
(43) Date de publication de la demande: **11.08.2004**
(21) Numéro de dépôt: 04300067.8
(22) Date de dépôt: 05.02.2004
(51) Int. Cl.: B60D 1/06, B60D 1/28

(54) **Dispositif anti-décrochage de tête d'attelage**

(30) Priorité: 05.02.2003 FR 0301363
(71) Demandeur: NEA'CONCEPT, 49340 VEZINS (FR)
(72) Inventeur: Terrien, Bernard, 49340 Vezins (FR)
(74) Mandataire: Michelet, Alain

(57) **Abrégé**

L'invention concerne un dispositif anti-décrochage d'une tête d'attelage (27) venant coiffer une boule de réception (26) d'un crochet (21) de véhicule tracteur, lequel dispositif comprend une structure de réception (2) support d'un élément de butée amovible (1). Cet élément de butée (1) est mobile entre d'une part, une position inactive permettant le positionnement ou l'enlèvement de la tête d'attelage (27) coiffant la boule de réception (26), et d'autre part, une position active dans laquelle ledit élément de butée (1) s'étend au-dessus de la boule de réception (26), à une distance empêchant le décrochage de la tête d'attelage (27) préalablement accrochée sur ladite boule de réception (26).

Conformément à l'invention, la structure de réception (2) est munie de moyens structurels de solidarisation avec le crochet (21), lesquels moyens de solidarisation sont adaptés pour ceinturer le collet (25) de la boule de réception (26).

## Description

La présente invention concerne un dispositif visant à empêcher le décrochage de la tête d'attelage d'un accessoire roulant de type remorque, caravane ou autre, coiffant la boule de réception du crochet d'un véhicule tracteur.

La tête d'attelage d'une remorque, caravane ou similaire, présente des moyens lui permettant d'être solidarisée à la boule de réception du crochet du véhicule tracteur, tout en assurant l'articulation de ladite tête sur ladite boule, en particulier pour supporter les déformations de la route et/ou les mouvements du véhicule tracteur par rapport à l'attelage.

Cependant, ces moyens de solidarisation de la tête d'attelage sur le crochet du véhicule tracteur ne sont pas complètement fiables et les risques de décrochage intempestifs ne sont pas inexistants. Ce décrochage peut alors être à l'origine d'accidents de la route s'il a lieu lorsque le véhicule et son attelage sont en mouvement.
En outre, les dispositifs de fixation correspondants ne sont pas vraiment adaptés pour prévenir les vols éventuels d'attelages fixés au crochet du véhicule de traction.

Différents dispositifs anti-décrochage ont été développés pour remédier à ces inconvénients, tels que décrits par exemple dans les documents US-A-3 479 057, US-A-3 047 839, GB-A-2 126 549 et CA-A-2 216 002.
Les dispositifs anti-décrochage correspondants comprennent chacun une structure de réception support d'un élément de butée amovible qui est mobile entre d'une part, une position inactive permettant le positionnement ou l'enlèvement de la tête d'attelage coiffant la boule de réception, et d'autre part, une position active dans laquelle ledit élément de butée s'étend au-dessus de la boule de réception, à une distance empêchant le décrochage de la tête d'attelage préalablement accrochée sur ladite boule de réception.
Cependant, ces systèmes anti-décrochage font partie intégrante des crochets qu'ils équipent, ce qui confère à l'ensemble une structure complexe.

La présente invention propose une alternative particulièrement intéressante aux dispositifs andi-décrochage connus à ce jour, qui présente l'avantage d'être adaptable sur tous types de crochets existants, ou sur la très grande majorité, ceci sans altérer la structure et l'intégrité du crochet de réception.
Les buts ci-dessus sont atteints par un dispositif anti-décrochage comprenant une structure de réception support d'un élément de butée amovible, qui est mobile entre les positions inactive et active, laquelle structure de réception est munie de moyens structurels de solidarisation avec le crochet, lesquels moyens de solidarisation sont adaptés pour ceinturer le collet de la boule de réception.

Selon une forme de réalisation particulière, la structure de réception comporte deux orifices horizontaux latéraux destinés à recevoir chacun une extrémité d'un étrier en U, lequel étrier, entourant le crochet de véhicule autour du collet, forme un ceinturage pour solidariser ledit dispositif sur ledit crochet.

Selon une disposition particulière, l'élément de butée amovible comporte un bras de butée s'étendant au-dessus de la boule de réception en position active, pour empêcher le décrochage de la tête d'attelage ; ce bras de butée est poursuivi par un arbre d'articulation vertical positionné dans un moyeu ou un orifice vertical aménagé dans ladite structure de réception, pour assurer un pivotement horizontal de l'élément de butée entre les positions active et inactive.

Selon une autre particularité, le dispositif anti-décrochage comporte des moyens de blocage de l'élément de butée en position active.
Dans ce cas, le montage de l'arbre d'articulation de l'élément de butée au sein du moyeu vertical de la structure de réception est avantageusement de type pivot-glissant ; l'arbre d'articulation forme une saillie sous la structure de réception, et il comporte un orifice de réception d'une goupille, laquelle goupille est destinée à venir s'insérer au moins partiellement dans une encoche complémentaire aménagée sur la surface inférieure de ladite structure de réception lorsque l'élément de butée est en position active, grâce à un moyen de maintien en position haute de l'élément de butée.

De préférence, le moyen de maintien en position haute de l'élément de butée est constitué d'un ressort de compression entourant l'arbre d'articulation dudit élément de butée ; ce ressort est en appui - par son extrémité supérieure sur la surface annulaire inférieure d'un collet aménagé sur l'arbre d'articulation, et - par son extrémité inférieure sur un épaulement annulaire aménagé dans le moyeu.

Selon encore une autre particularité, le dispositif anti-décrochage comporte des moyens permettant le verrouillage de l'élément de butée amovible en position active. Par « moyen de verrouillage », on entend tous moyens permettant à l'utilisateur du dispositif d'empêcher tout tiers de réaliser le passage de l'élément de butée de la position active à la position inactive.

Selon une première alternative de réalisation, la partie supérieure de l'arbre d'articulation comporte un orifice dont la surface inférieure est juxtaposée à la bordure supérieure du moyeu de la structure de réception en position active, lequel orifice est adapté pour recevoir le pêne d'un élément de verrouillage empêchant tout mouvement vertical de l'élément de butée.

Selon un autre mode de réalisation possible, le moyeu de la structure de réception comporte un tube horizontal d'accueil d'un barillet à clé ; ce barillet présente un calibre adéquat pour former une butée horizontale juxtaposée sous la surface inférieure du collet de l'arbre d'articulation lorsque l'élément de butée est en position haute active, empêchant également tout mouvement vertical de l'élément de butée amovible.
De préférence, le barillet à clé est verrouillé au sein du tube d'accueil par un ergot rétractable venant se positionner dans une encoche complémentaire aménagée dans la surface dudit tube d'accueil.

L'invention sera encore détaillée à l'aide de la description suivante et des dessins annexés, relatifs à des modes de réalisation particuliers, donnés à titre indicatif, et dans lesquels :
- la figure 1 est une vue éclatée de côté d'un dispositif anti-décrochage selon la présente invention ;
- la figure 2 est une vue de dessus de la structure de réception du dispositif anti-décrochage représenté figure 1 ;
- la figure 3 est une vue de côté du dispositif anti-décrochage représenté figure 1, convenablement rapporté sur un crochet d'attelage ;
- la figure 4 est une vue de derrière du dispositif anti-décrochage représenté figures 1 et 3 ;
- la figure 5 représente une vue de dessus du dispositif anti-décrochage selon les figures 1 et 3 ;
- la figure 6 est une vue de côté du dispositif anti-décrochage représenté figures 1 et 3 placé en position inactive ;
- la figure 7 représente un dispositif anti-décrochage conforme à l'invention comportant un moyen de verrouillage de genre cadenas ;
- la figure 8 représente le dispositif anti-décrochage représenté figure 7 en mode verrouillé par un cadenas ;
- la figure 9 est une vue de côté d'une autre forme de réalisation possible d'un dispositif anti-décrochage conforme à l'invention comportant un moyen de verrouillage de type barillet à clé ;
- la figure 10 est une vue en coupe du dispositif anti-décrochage représenté sur la figure 9 en mode verrouillé.

Le dispositif anti-décrochage conforme à l'invention, est adaptable sur la plupart des crochets d'attelage existants. Un type de crochet classique apparaît sur les figures annexées, pour illustrer la mise en oeuvre de l'objet de l'invention ; ce crochet comporte un corps coudé dont l'une des extrémités est munie de moyens de fixation sur le véhicule tracteur, et dont l'autre extrémité se termine par une boule d'attelage ou boule de réception, raccordée par un collet plus étroit.

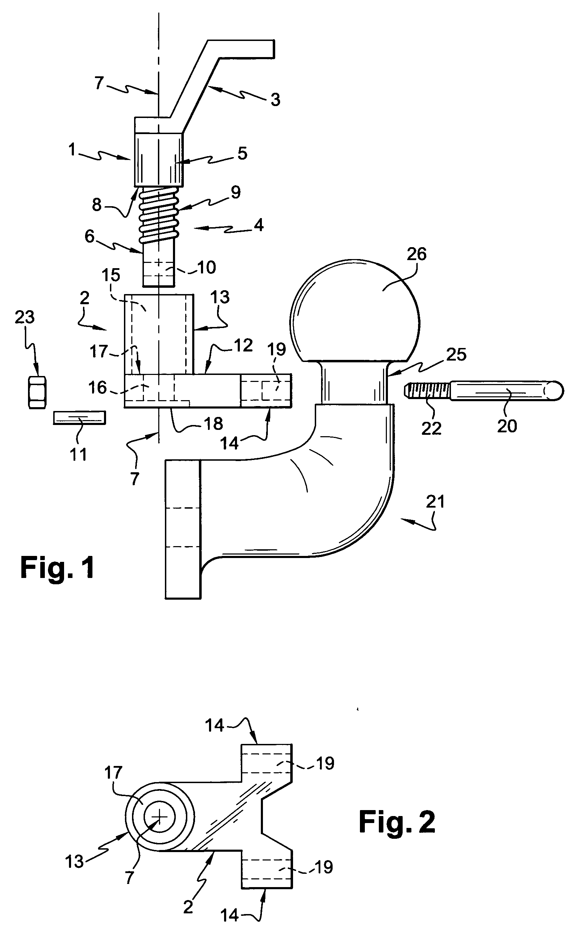

Le dispositif anti-décrochage illustré sur les figures 1 à 6, comprend deux principaux éléments structurels : un élément de butée 1 et une structure de réception 2.

L'élément de butée 1 comporte un bras de butée 3, prolongé verticalement au niveau de son extrémité inférieure par un arbre d'articulation 4, lequel arbre 4 est constitué en partie supérieure d'un collet 5, poursuivi verticalement par un prolongement cylindrique 6.

Le bras de butée 3 se présente sous la forme d'un élément, par exemple parallélépipédique, s'étendant diagonalement vers le haut selon un angle d'environ 45° par rapport à l'axe central 7, son extrémité supérieure étant poursuivie par un prolongement horizontal.

Le collet 5 et son prolongement 6 sont disposés suivant un même axe central 7, mais sont de calibres différents : le collet 5 est d'un diamètre supérieur et d'une longueur inférieure en comparaison des dimensions du prolongement cylindrique 6.
Cette différence de diamètre entre le collet 5 et son prolongement cylindrique 6 forme un épaulement annulaire 8 au niveau de la surface inférieure du collet 5.
Le prolongement cylindrique 6 est entouré par un ressort de compression 9, lequel ressort 9 est en appui par son extrémité supérieure sur l'épaulement 8, formé par la surface inférieure du collet 5.
De plus, ce prolongement 6 est muni d'un orifice cylindrique transversal 10, dans sa partie inférieure, orienté parallèlement au prolongement horizontal du bras de butée 3. Cet orifice 10 est adapté pour recevoir par insertion une goupille cylindrique 11.

La structure de réception 2, figures 1 et 2, présente vue de côté une forme générale de L. Elle est constituée d'une base horizontale 12, de forme générale parallélépipédique, munie sur sa face supérieure au niveau de l'une de ses extrémités, d'un moyeu vertical 13, de forme générale cylindrique.

La structure de réception 2 est traversée de part en part au niveau du moyeu 13 par un orifice vertical 15, 16, présentant deux diamètres différents mais de même axe central 7. Plus précisément, l'orifice vertical 15, 16 est constitué d'une partie supérieure 15 correspondant au moyeu 13, dont le diamètre est, au jeu près, identique au diamètre extérieur du collet 5 de l'arbre d'articulation 4, et d'une partie inférieure 16, correspondant à un orifice traversant la base horizontale 12, dont le diamètre correspond au jeu près au diamètre extérieur du prolongement cylindrique 6 de l'arbre d'articulation 4 ; la surface supérieure de la base horizontale 12 forme, au sein de l'orifice vertical 15, 16, un épaulement annulaire 17 correspondant au fond du moyeu 13.
Comme expliqué ultérieurement, l'orifice vertical 15, 16 est destiné à recevoir l'arbre d'articulation 4 et à permettre l'articulation de l'élément de butée 1.

La surface inférieure de la structure de réception 2, et plus précisément la surface inférieure de la base horizontale 12, est munie d'une encoche 18 de forme demi-cylindrique s'étendant symétriquement sur une courte distance, par exemple de quelques millimètres, de part et d'autre de l'extrémité de l'orifice vertical 15, 16, orienté dans la longueur de la base horizontale 12 ; cette encoche 18 est de forme complémentaire à la surface supérieure de la goupille 11.

L'extrémité de la base horizontale 12 de la structure de réception 2, opposée au moyeu 13, comporte deux prolongements parallélépipédiques latéraux 14, munis chacun d'un orifice transversal horizontal 19, destiné à coopérer avec un étrier 20 pour assurer la solidarisation du dispositif sur un crochet d'attelage 21.

Cet étrier 20 est constitué d'un élément en U, dont chaque extrémité libre 22 comporte un filetage permettant la fixation d'écrous 23. Le diamètre des extrémités libres 22 de l'étrier 20 est légèrement inférieur au diamètre interne des orifices transversaux horizontaux 19 des prolongements latéraux 14, pour assurer le passage desdites extrémités 22 à travers lesdits orifices 19.

A titre uniquement indicatif, il est intéressant de préciser certaines dimensions structurelles du dispositif anti-décrochage.
Le bras de butée 3 présente une épaisseur de 6 mm pour une largeur de 20 mm. La partie diagonale vers le haut présente une longueur d'environ 32 mm, et le prolongement horizontal est d'une longueur d'environ 27 mm. Ce bras de butée 3 s'étend alors horizontalement sur 47 mm par rapport à l'axe central 7 et verticalement sur 30 mm par rapport à sa partie inférieure.
L'arbre d'articulation 4 est constitué d'un collet 5 présentant un diamètre externe de 22,5 mm et de 21 mm de longueur, et d'un prolongement cylindrique 6 présentant un diamètre de 12 mm et une longueur de 39 mm.
Concernant la structure de réception 2, la base horizontale 12 présente une longueur de 64,5 mm, pour une largeur de 25 mm et une épaisseur de 14 mm. Le moyeu 13 présente un diamètre externe de 25 mm et un diamètre interne de 22,5 mm, pour une hauteur de 25 mm. La partie inférieure 16 de l'orifice vertical 15, 16, correspondant à la base horizontale 12, présente un diamètre de 12 mm pour une hauteur de 14 mm.
Les prolongements latéraux 14 de la base horizontale 12 présentent une largeur de 14 mm pour une longueur de 20 mm et une épaisseur de 14 mm. Chaque prolongement 14 est muni d'un orifice 19 de diamètre de l'ordre de 8,4 mm. L'étrier 20 présente un diamètre général de 8,3 mm. Ses deux parties rectilignes parallèles présentent chacune une longueur de 60 mm, et comportent chacune un filetage de 14 mm.

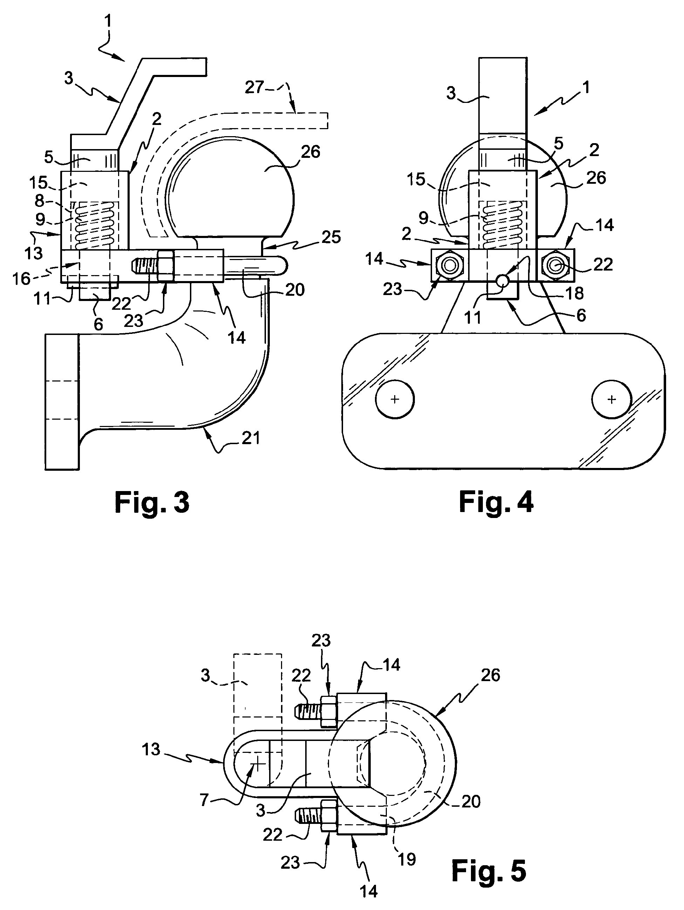

L'élément de butée 1 et la structure de réception 2, figures 1 et 2, sont assemblés pour obtenir un dispositif anti-décrochage fonctionnel puis convenablement rapporté sur le crochet d'attelage 21, tel que représenté sur les figures 3 à 6.

L'assemblage du dispositif consiste à introduire l'arbre d'articulation 4 de l'élément de butée 1 à travers l'orifice vertical 15, 16 de la structure de réception 2, jusqu'à ce que l'extrémité libre du prolongement cylindrique 6 forme une saillie sous la surface inférieure de la structure de réception 2 ; cette saillie doit être suffisante pour rendre accessible l'orifice cylindrique transversal 10, et ainsi pouvoir introduire la goupille cylindrique 11 au sein de cet orifice 10.
La mise en saillie de l'extrémité libre du prolongement cylindrique 6 provoque la compression du ressort 9 entourant le prolongement cylindrique 6, lequel ressort 9 est en appui - par son extrémité supérieure sur l'épaulement 8 aménagé sur l'arbre d'articulation 4, et - par son extrémité inférieure sur l'épaulement annulaire 17 aménagé au sein de l'orifice vertical 15, 16 ; ce ressort 9 tend alors à déplacer l'élément de butée 1 vers le haut au sein de l'orifice vertical 15, 16, jusqu'à ce que la goupille 11 insérée dans l'orifice 10 entre en contact avec la surface inférieure de la structure de réception 2, et éventuellement s'insère au sein de son encoche complémentaire 18. Le dispositif anti-décrochage, une fois assemblé, est mis en place autour du collet 25 du crochet d'attelage 21, figures 3 à 6, et il est boulonné à l'étrier 20.

Le dispositif anti-décrochage est solidarisé sur le collet 25 du crochet 21 de sorte à être positionné entre la boule de réception 26 de la tête d'attelage 27 et le véhicule tracteur sur lequel est fixé le crochet d'attelage 21.

L'élément de butée 1 est représenté en position active sur les figures 3 à 5, c'est-à-dire dans une position où le bras 3 forme une butée s'étendant au-dessus de la boule de réception 26, empêchant le décrochage d'une tête d'attelage 27 préalablement solidarisée par des moyens classiques sur ladite boule de réception 26.

La forme du bras de butée 3 permet à la tête d'attelage 27 de s'articuler normalement sur la boule de réception 26, en évitant tout problème d'encombrement. Par exemple, la distance entre la partie supérieure de la boule de réception 26 et la surface inférieure du prolongement horizontal du bras de butée 3 peut être de l'ordre de 20 à 25 mm.

L'élément de butée 1 est bloqué dans cette position active par l'insertion partielle de la goupille cylindrique 11, équipant le prolongement cylindrique 6, dans l'encoche 18 aménagée sur la surface inférieure de la structure de réception 2 ; cette goupille 11 est maintenue insérée dans l'encoche 18 par le ressort 9, tendant à maintenir l'élément de butée 1 dans une position haute au sein de l'orifice vertical 15, 16.

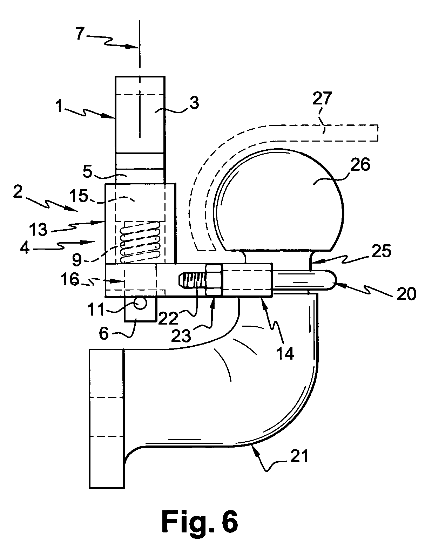

Le passage de la position active à la position inactive, position représentée sur la figure 5 en pointillés et sur la figure 6, s'effectue en exerçant une pression verticale vers le bas sur l'élément de butée 1, de manière à dégager la goupille 11 de son encoche 18 complémentaire, puis en faisant tourner l'élément de butée 1 d'un angle suffisant, par exemple de l'ordre de 90°, pour dégager l'espace au-dessus de la boule de réception 26. L'élément de butée 1 est ensuite relâché, le ressort 9 assurant le retour de l'élément de butée 1 en position haute, avec sa goupille 11 venant en contact de la surface inférieure de la structure de réception 2.

L'élément de butée 1 en position inactive permet alors le positionnement ou l'enlèvement de la tête d'attelage 27 coiffant la boule de réception 26.

Selon un mode alternatif de réalisation non représenté, il peut être envisagé d'aménager à la fois une encoche 18 pour le blocage de l'élément de butée 1 en position active, mais aussi une encoche similaire pour le blocage de l'élément de butée 1 en position inactive.

Le mode particulier de réalisation décrit ci-dessus peut également comporter des moyens de verrouillage de l'élément de butée 1 en position active de manière à empêcher toute possibilité de désactivation par une personne non autorisée.

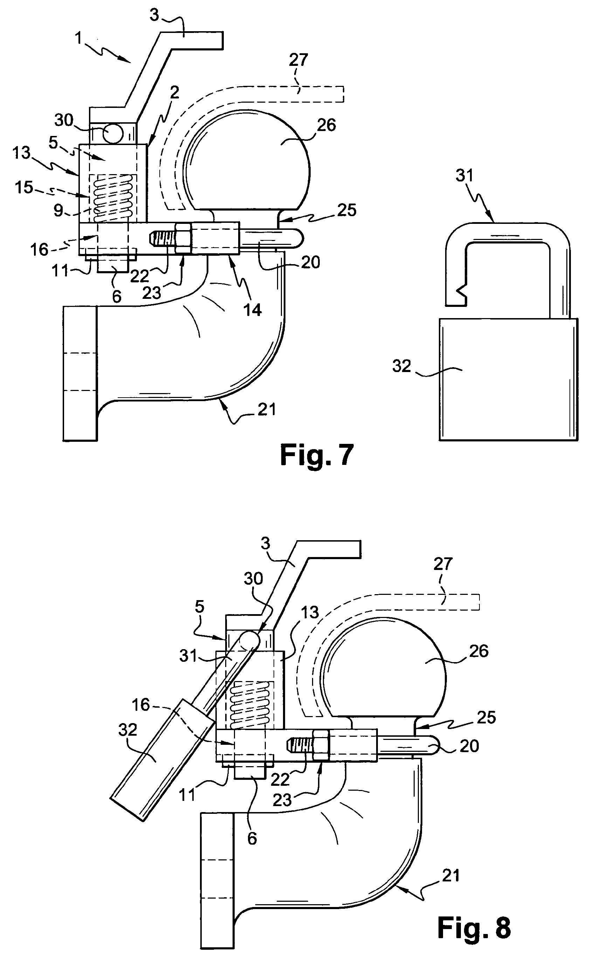

Selon une première forme de réalisation, le dispositif anti-décrochage comporte un moyen de verrouillage de l'élément de butée 1 en position active de type cadenas, tel que représenté figures 7 et 8.

Dans ce mode de réalisation, l'élément de butée 1 et la structure de réception 2 sont de structures générales identiques à celles décrites ci-dessus.
Par contre, la partie du collet 5, directement visible lorsque l'élément de butée 1 est en position active, est munie d'un orifice transversal 30, dont la bordure interne inférieure est juxtaposée à la surface supérieure du moyeu 13 ; le diamètre de l'orifice 30 est adapté pour recevoir le pêne 31 en arceau d'un cadenas 32.

L'insertion dudit pêne 31 dans l'orifice 30, figure 8, lorsque l'élément de butée 1 est en position active, empêche toute translation verticale de l'élément de butée 1 au sein de l'orifice vertical 15, 16 de la structure de réception 2. Cet élément de butée 1 est alors bloqué en position active, la goupille 11 insérée dans l'encoche 18 complémentaire empêchant tout pivotement de l'élément de butée 1.

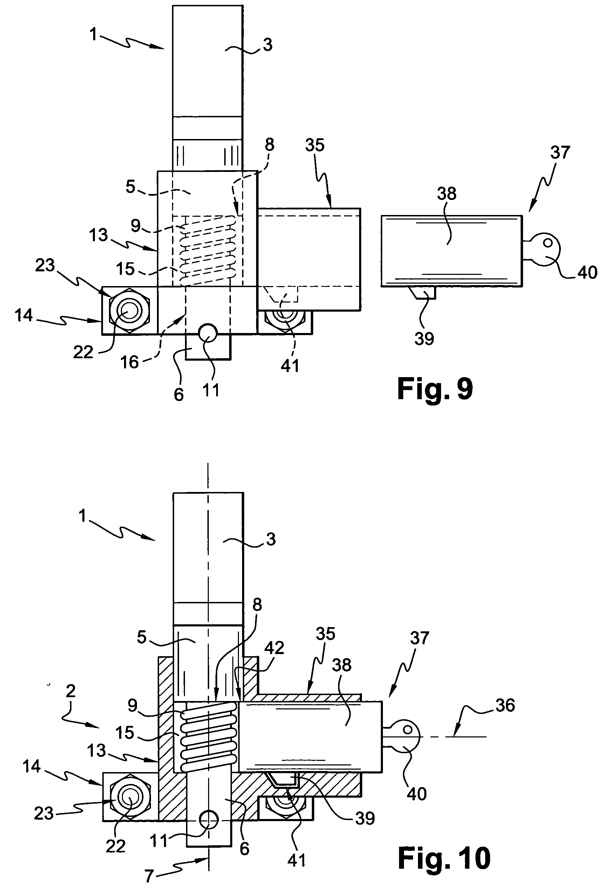

Un mode alternatif de réalisation du moyen de verrouillage en position active consiste en une structure de type barillet à clé, tel que représenté sur les figures 9 et 10.

L'élément de butée 1 est identique à celui représenté sur les figures 1 à 6, le perfectionnement portant sur la structure de réception 2, et plus particu lièrement sur le moyeu 13.
En effet, la paroi du moyeu 13 comporte un tube transversal 35, dont l'axe central 36 est perpendiculaire à l'axe central 7 de l'orifice vertical 15, 16. Ce tube 35 est adapté pour recevoir un barillet à clé 37, constitué d'un cylindre 38, dont le diamètre extérieur correspond au jeu près au diamètre interne du tube transversal 35, lequel cylindre 38 est équipé d'un ergot rétractable 39 manoeuvrable par une clé 40 ; l'ergot 39 en saillie est destiné à s'insérer dans une encoche 41 complémentaire, aménagée selon le plan vertical central dans la surface interne inférieure du tube transversal 35.

Le barillet 37 verrouillé dans son tube transversal 35, figure 10, forme une saillie horizontale 42 de courte distance, par exemple de l'ordre de quelques millimètres, dans la partie supérieure 15 de l'orifice vertical 15, 16 de la structure de réception 2 ; l'épaulement 8, aménagé sur le bras d'articulation 4, se trouve juxtaposé ou en contact de la surface supérieure dudit barillet 37.
Cette saillie horizontale 42 forme alors une butée empêchant toute possibilité de mouvement vertical de l'élément de butée 1, et par conséquent empêchant le désengagement de la goupille 11 insérée dans son encoche demi-cylindrique 18 complémentaire. L'élément de butée 1 est verrouillé en position active.

La rotation de la clé 40 dans le barillet 37 permet de rétracter l'ergot 39, ce qui permet la sortie dudit barillet 37 préalablement disposé au sein du tube transversal 35. L'élément de butée 1 déverrouillé, peut alors être déplacé d'une position active à une position inactive, et inversement.

Ces dispositifs anti-décrochage, comportant des moyens de verrouillage de l'élément de butée mobile en position active, sont particulièrement intéressants afin d'éviter le vol de l'attelage associé au véhicule tracteur. En effet, seule une personne en possession du moyen de déverrouillage adéquat, en particulier de la clé adaptée au barillet 37 ou au cadenas 32, peut déverrouiller l'élément de butée 1 pour le disposer en position inactive.

## Revendications

1. Dispositif anti-décrochage d'une tête d'attelage venant coiffer une boule de réception d'un crochet de véhicule tracteur, lequel dispositif comprend une structure de réception (2) support d'un élément de butée amovible (1), lequel élément de butée (1) est mobile entre d'une part, une position inactive permettant le positionnement ou l'enlèvement de la tête d'attelage (27) coiffant la boule de réception (26), et d'autre part, une position active dans laquelle ledit élément de butée (1) s'étend au-dessus de la boule de réception (26), à une distance empêchant le décrochage de la tête d'attelage (27) préalablement accrochée sur ladite boule de réception (26), **caractérisé en ce qu'**il comporte une structure de réception (2) munie de moyens structurels de solidarisation avec ledit crochet (21), lesquels moyens de solidarisation sont adaptés pour ceinturer le collet (25) de ladite boule de réception (26).

2. Dispositif anti-décrochage selon la revendication 1, **caractérisé en ce que** la structure de réception (2) comporte deux orifices horizontaux latéraux (19) destinés à recevoir chacun une extrémité (22) d'un étrier en U (20), lequel étrier (20), entourant le crochet de véhicule (21) autour du collet (25), forme un ceinturage pour solidariser ledit dispositif sur ledit crochet (21).

3. Dispositif anti-décrochage selon l'une quelconque des revendications 1 ou 2, **caractérisé en ce que** l'élément de butée amovible (1) comporte un bras de butée (3) s'étendant au-dessus de la boule de réception (26) en position active pour empêcher le décrochage de la tête d'attelage (27), lequel bras (3) est poursuivi par un arbre d'articulation vertical (4) positionné dans un orifice d'articulation vertical (15, 16) aménagé dans la structure de réception (2), pour assurer un pivotement horizontal de l'élément de butée (1) entre la position active et la position inactive.

4. Dispositif anti-décrochage selon l'une quelconque des revendications 1 à 3, **caractérisé en ce qu'**il comporte des moyens de blocage de l'élément de butée (1) en position active.

5. Dispositif anti-décrochage selon la revendication 4, **caractérisé en ce que** l'articulation de l'arbre (4) de l'élément de butée (1) au sein de l'orifice d'articulation (15, 16) est de type pivot-glissant, lequel arbre d'articulation (4) forme une saillie sous le support de réception (2), laquelle saillie comporte une goupille (11) venant s'insérer dans une encoche complémentaire (18) aménagée sur la surface inférieure du support de réception (2) lorsque le bras est en position active, laquelle goupille (11) est maintenue dans ladite encoche (18) par un moyen de maintien en position haute de l'élément de butée (1).

6. Dispositif anti-décrochage selon la revendication 5, **caractérisé en ce que** le moyen de maintien en position haute de l'élément de butée (1) comprend un ressort de compression (9) entourant l'arbre d'articulation (4) de l'élément de butée (1), ledit ressort (9) étant en appui - par son extrémité supérieure sur la surface annulaire inférieure (8) d'un collet (5) aménagé sur l'arbre d'articulation (4), et - par son extrémité inférieure sur un épaulement annulaire (17) aménagé dans l'orifice vertical (15, 16).

7. Dispositif anti-décrochage selon l'une quelconque des revendications 1 à 6, **caractérisé en ce qu'**il comporte des moyens de verrouillage empêchant la désactivation de l'élément de butée amovible (1) en position active.

8. Dispositif anti-décrochage selon l'une quelconque des revendications 5 ou 6, **caractérisé en ce que** la partie supérieure de l'arbre d'articulation (4) comporte un orifice (30) dont la surface inférieure est juxtaposée à la bordure supérieure de l'orifice d'articulation (15, 16) de la structure de réception (2) en position haute active, lequel orifice (30) est adapté pour recevoir le pêne (31) d'un élément de verrouillage (32), empêchant tout mouvement vertical de l'élément de butée (1).

9. Dispositif anti-décrochage selon la revendication 6, **caractérisé en ce que** la paroi de l'orifice d'articulation (15, 16) comprend un tube transversal (35) d'un barillet à clé (37), lequel barillet (37) présente un calibre adéquat pour former une butée horizontale (42) juxtaposée sous la surface annulaire inférieure (8) du collet (5) de l'arbre d'articulation (4) lorsque l'élément de butée (1) est en position haute active, empêchant tout mouvement vertical de l'élément de butée amovible (1).

10. Dispositif anti-décrochage selon la revendication 9, **caractérisé en ce que** le barillet à clé (37) est verrouillé au sein du tube transversal (35) par un ergot rétractable (39) destiné à se positionner dans une encoche complémentaire (41) aménagée dans la surface dudit tube (35).
